# EUROPEAN PATENT SPECIFICATION

(11) **EP 0 440 216 B1**
(45) Date of publication and mention of the grant of the patent: **01.05.1996**
(21) Application number: 91101238.3
(22) Date of filing: 30.01.1991
(51) Int. Cl.: H04N 9/73, H04N 9/31

(54) **White balance control system**
Weissabgleich-Steuersystem
Système de contrôle de l'équilibre du blanc

(30) Priority: 30.01.1990 JP 21489/90
(43) Date of publication of application: 07.08.1991
(73) Proprietor: PIONEER ELECTRONIC CORPORATION, Meguro-ku Tokyo 153 (JP)
(72) Inventor: Ajima, Kohsuke, c/o Ohmori Koujou, Ohta-ku, Tokyo (JP)
(74) Representative: Popp, Eugen, Dr.

(56) References cited:
- EP-A- 0 184 901
- EP-A- 0 198 692
- GB-A- 2 169 773
- US-A- 3 877 068
- US-A- 4 485 394
- US-A- 4 700 218
- US-A- 4 962 418
- PATENT ABSTRACTS OF JAPAN vol. 9, no. 173 (E-329)18 July 1985 & JP-A-60 043 988
- PATENT ABSTRACTS OF JAPAN vol. 10, no. 285 (E-441)27 September 1986& JP-A-61 102 893

## Description

The present invention relates to a white balance control system for a projection television receiver, and more particularly to a white balance control system for automatically controlling balance of color when quantities of light of the three primary colors decrease with time.

In recent years, in order to provide a wider screen for a television receiver, it has become common to employ a projection television system.

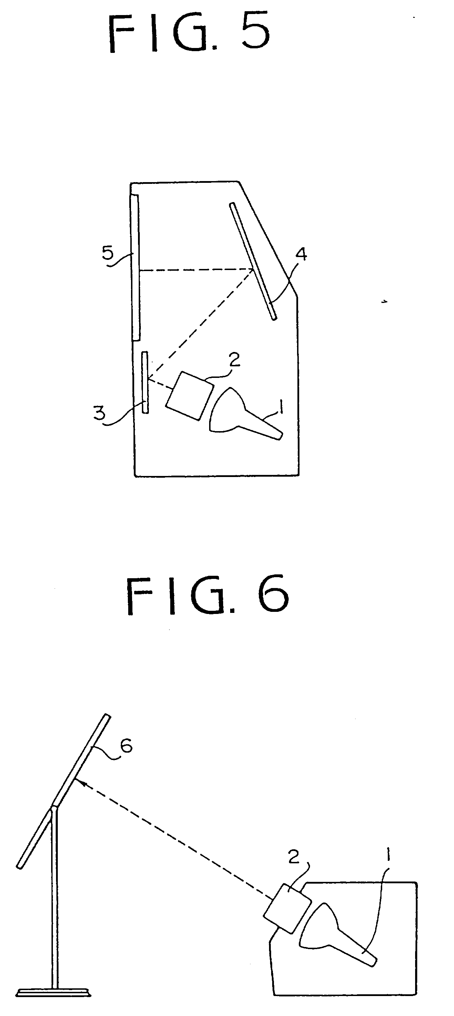

A rear projection system as one of the systems of the projection television is shown in Fig. 5. A picture tube 1 produces a pictorial image which is expanded by a lens 2. The image is reflected on opposing reflecting mirrors 3 and 4 and reproduced on a light-transmissible screen 5.

Fig. 6 shows another projection television receiver where the image is reproduced on a reflecting screen 6 from the front thereof.

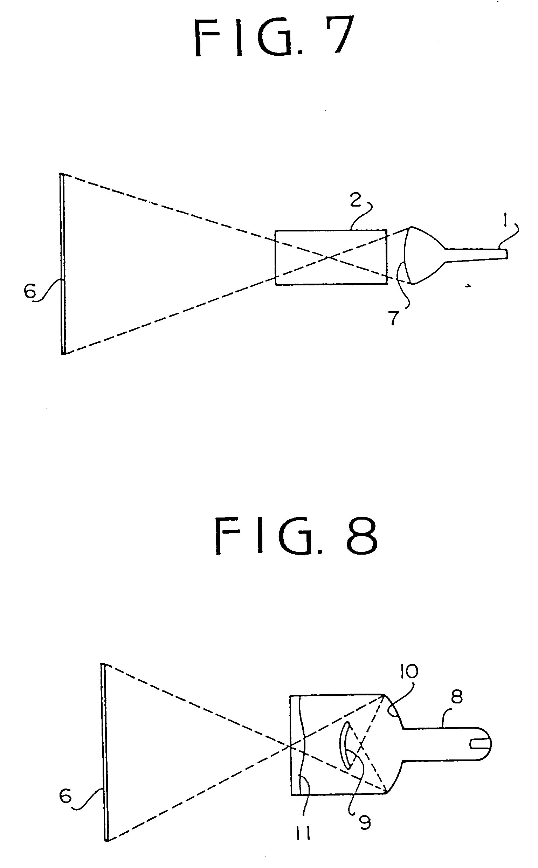

There are other types of projection systems such as a refraction system shown in Fig. 7 and a reflection system shown in Fig. 8 dependent on the type of picture tubes 1. In the refraction system, the lens 2 is provided in front of a fluorescent screen of the picture tube 1. The lens 2 expands and reproduces the image on the reflecting screen 6.

To the contrary, in the reflection system, a picture tube 8 has a fluorescent screen 9 and a reflecting mirror 10 provided in the tube 8. The image reflected on the reflecting mirror 10 is expanded through a Schmidt lens 11 and reproduced on the reflecting screen 6.

With the rear projection system shown in Fig. 5, since the picture tube 1 and the lens 2 can be disposed adjacent the screen 6, the television receiver can be reduced in size. The light-transmissible screen 5 is made of a material having a high light transmittance, such as a Fresnel lens and a lenticular sheet.

For the projection of color, there are three picture tubes 1 (8) for red (R), green (G) and blue (B). White balance is obtained by adjusting the ratio of light between the takes into red light of 30%, green light of 59%, and blue light of 11%. However, the fluorescent screen 7 (9) of the picture tube has a low luminous efficacy particularly for blue. Accordingly, in order to maintain the balance with the other colors, the current i supplied to the blue picture tube is increased. Thus the joule heat caused by the current i heats the screen of the blue picture tube, thereby quickly deteriorating it.

Hence, as the screen of the blue picture tube deteriorates with time, the luminous efficacy of the blue light is further decreased. As a result, the quantities of red and green light relatively increase. The picture on the screen 6 will thus gradually assume a yellowish color. The color can be corrected by manipulating a dial for controlling the color balance. However, the adjusting operation is complicated.

The United States Patent US-A-3 877 068 discloses a color balance apparatus for a color television comprising a computing circuit which calculates mean quantities of the outputs of photoelectric sensor elements for the three primary colors. A reference circuit is provided which generates color balance controlling signals by comparing each mean value of primary color light to each of a set of theoretically predetermined standard values.

The United States Patent US-A-4 485 394 discloses a system for automatic correction of convergence and grey scale in color television. At least one light sensor is permanently positioned on the screen of a projection receiver. Means are provided for blanking two of the three cathode ray tubes, such that the sensor successively receives light of each of three primary colors. The output of the sensor is amplified for each of the cathode ray tubes in sequential order and the outputs are compared to preset values to develop error signals according to which the grey scale is corrected.

The object of the present invention is to provide a white balance control system in which the above-described problem of yellowing is overcome so as to constantly provide a pictorial image in appropriate color.

According to the present invention, there is provided a white balance control system as defined in claim 1.

The other objects and features of this invention will become understood from the following description of embodiments with reference to the accompanying drawings.

Fig. 1 is a block diagram of a control system for a projection display television receiver provided with a cathode-ray display, as a first embodiment of the invention;
Fig. 2 is a block diagram of a white balance control circuit provided in the system;
Fig. 3 is a flowchart showing the operation of the white balance control circuit;
Fig. 4 is a block diagram of a control system of a projection display television receiver having a liquid crystal display, as a second embodiment of the present invention;
Fig. 5 is a schematic diagram of a conventional rear projection television receiver;
Fig. 6 is a schematic diagram of a conventional front projection television receiver; and
Fig. 7 and 8 show other projection television receivers.

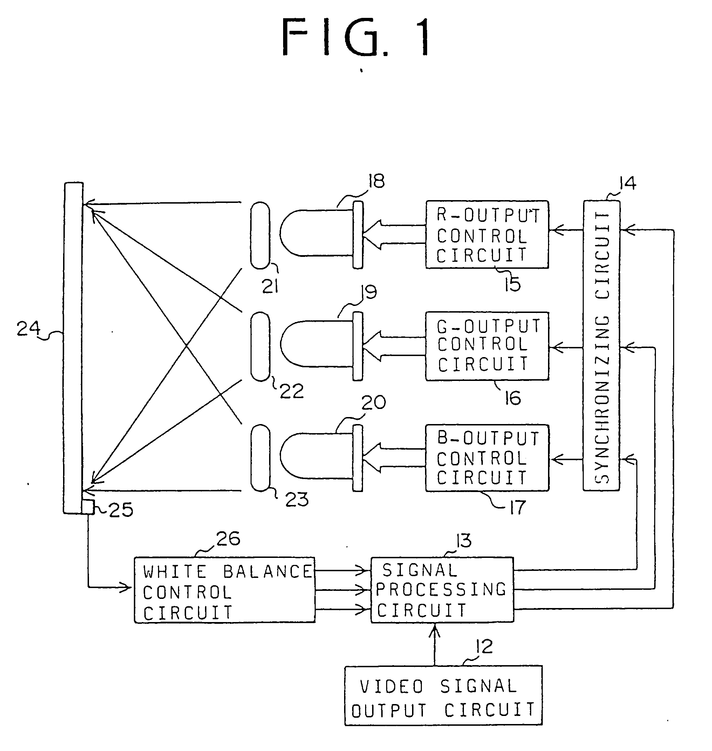

Fig. 1 shows a projection television receiver to which a white balance control system of the first embodiment is applied. The receiver has CRT (cathode-ray tube) displays which project pictorial images from the front thereof. The control system of the television receiver comprises a video signal output circuit 12, a signal processing circuit 13, a synchronizing circuit 14, color output control circuits 15, 16 and 17. The video signal output circuit 12 is connected to a video signal source such as a television tuner, CATV tuner, video tape recorder and video disk player, so as to be fed with video signals. The signal processing circuit 13 produces red, green and blue video signals in accordance with the output signal of the output circuit 12. The synchronizing circuit 14 controls the projection timing of the video signals applied to the control circuits 15 to 17 to prevent deflection of color and decrease of resolution.

The video signals are applied to the R-output control circuit 15, G-output control circuit 16 and a B-output control circuit 17, the output signals of which are fed to respective picture tubes 18, 19 and 20 so as to control the light emitting operation thereof. As a result, each of the picture tubes 18, 19 and 20 produces an image and which is projected on to a light-transmissible screen 24 through a corresponding one of the projection lenses 21, 22 and 23.

Light quantity sensors 25 are provided on the screen 24, for example at the four corners of the screen where the pictorial image is not affected, to detect the quantity of light projected onto the light transmissible screen 24. The sensor 25 may be embedded in a black striped portion of a lenticular sheet if the sensor is small enough. A pickup unit (camera), photodiode, phototransistor, photoelectric converter elements each having different spectral sensitivity characteristics, or further, a packaged color sensor may be used as the light quantity sensor 25. A color sensor PD170V1 manufactured by Sharp Co. Ltd may also be used.

The output signals of the light quantity sensors 25 are fed to a white balance control circuit 26 to adjust the intensity of beam of each primary color so as to reproduce appropriate white on the screen in a wide range from high luminance to low luminance.

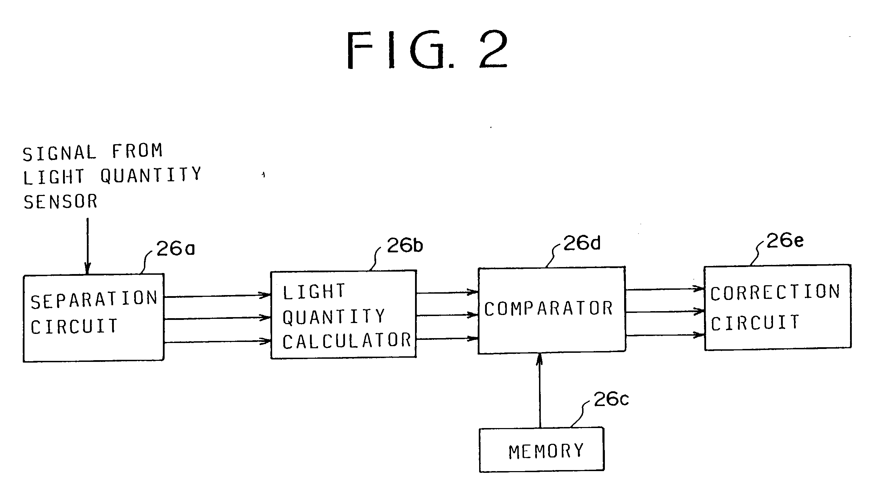

Referring to Fig. 2, the white balance control circuit 26 has a color separation circuit 26a for splitting the signal detected by the light quantity sensor 25 into red, green and blue components. The ratio of quantities of light corresponding to each component is calculated by a light quantity calculator 26b. The white balance control circuit further has a memory 26c such as an EEPROM wherein a reference light quantity ratio of the red, green and blue components is stored. The light quantity ratio calculated in the light quantity calculator 25b is compared with the reference light quantity ratio by a comparator 26d.

The reference ratio stored in the memory 26c during the production of the receiver is obtained as follows. After adjustments such as conversence are completed, a standard signal is projected on the screen 24 and the light quantity is detected by the sensors 25. A standard ratio is calculated in dependency on the detected light quantity of the standard signal and converted into data corresponding to each quantity of light.

The white balance controlling circuit 26 is further provided with a correction circuit 26e for correcting the actual ratio when the ratio calculated by the calculator 26b does not coincide with the reference ratio stored in the memory 26c. The correction circuit 26e corrects the actual ratio based on the smallest light quantity of the three colors which decreases the most.

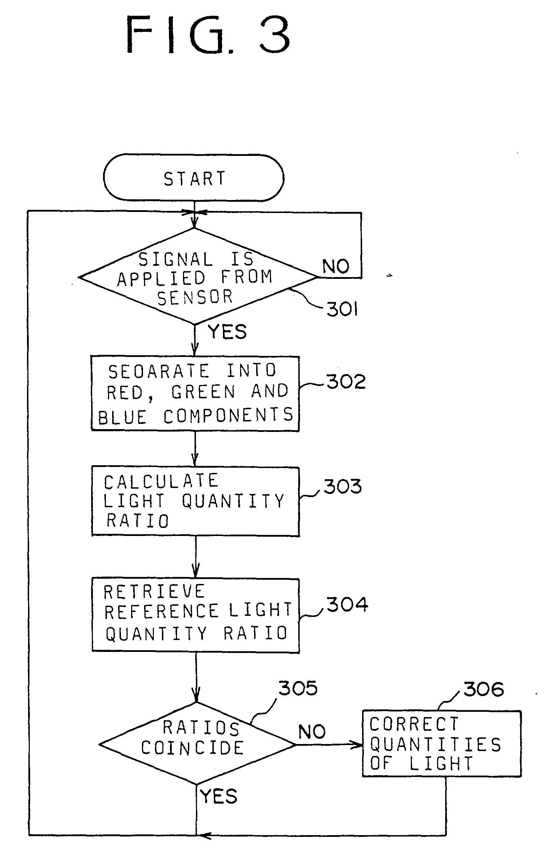

The operation of the white balance circuit 26 is described with reference to Fig. 3.

At a step 301, it is determined whether the signal is fed from the light quantity sensor 25. When the signal is fed, the signal is separated into red, green and blue components in the separation circuit 26a (step 302). At a step 303, the light quantity calculator 26b calculates the ratio of the quantities of light corresponding to red, green and blue. Thereafter, the reference light quantity ratio in the memory 26c is read (step 304) and compared with the calculated ratio (step 305). If the ratios match, the program returns to the step 301 to repeat the program.

When the calculated ratio does not coincide with the reference ratio, the correction section 26e is operated to correct the actual ratio. More particularly, an appropriate white balance is obtained when the percentages of red, green and blue lights are 30%, 59% and 11%, respectively. When the quantity of light of one of the color components, for example the blue, decreases, then the quantities of light of other components, red and green, are decreased so as to maintain the quantity of light of the blue component at 11%. Thus, the images reproduced on the screen are always adjusted to appropriate colors.

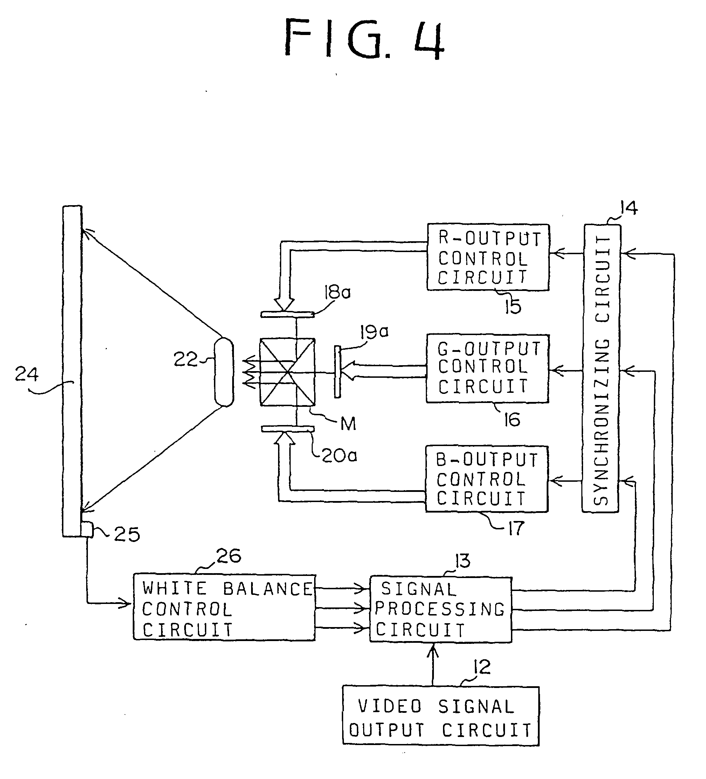

Fig. 4 shows the second embodiment of the present invention where a liquid crystal display is provided instead of the CRT display. The same numerals as those in Fig. 1 designate the same parts in Fig. 4 as Fig. 1, and therefore, the description thereof is omitted.

The video signals controlled by the R-output control circuit 15, G-output control circuit 16 and B-output control circuit 17 are applied to liquid crystal display panels 18a, 19a and 20a, respectively, thereby reproducing images on each panel. Dichroic mirrors M serve as prisms which transmit the image on each display panel 18a, 19a and 20a to the lens 22.

As described above, the ratio between the quantities of light corresponding to the primary color components are corrected based on the quantity of light of the most deteriorated color component.

Since picture elements of the liquid crystals provided in the multiple liquid crystal display panels are apt to deteriorate faster, the present embodiment is more effective in controlling the color of the image reproduced on the screen than in the television receiver provided with CRT displays. If the liquid crystal itself deteriorates, the contrast of the images weakens. However, an appropriate balance of color can be obtained by darkening the entire image.

Although in the described embodiments, the light quantity sensor is provided for detecting quantity of light of all of the color components, red, green and blue, the embodiments may be modified to detect only the quantity of light of the color which most easily deteriorates, namely blue, thus enabling to reduce the cost.

The present invention may be applied to rear projection television receivers and to ordinary television receivers.

From the foregoing, it will be understood that the present invention provides a white balance control system wherein a ratio between the quantities of lights of the primary color components is automatically corrected in accordance with the decrease of the quantity of light projected on the screen, so that a desirable color of the images is always obtained.

## Claims

1. A white balance control system for a projection
television system having a red output control circuit (15), a green output control circuit (16) and a blue output control circuit (17), and projection means (18, 19, 20) projecting beams of three colours onto a screen (24) respectively, said control system comprising:
a detector (25) for detecting a quantity of light of the beams;
a control circuit (26) producing correction signals for adjusting the intensity of the beam of each of said three colours;
a signal processing circuit (13) for processing video signals applied to the three output control circuits in accordance with the correction signals;
characterized in that
said control circuit (26) is a white balance control circuit comprising:
a colour separation circuit (26a) for separating a signal detected by the detector into red, green and blue components;
a calculator (26b) for calculating an actual ratio of the detected quantity of light of each colour component to a whole quantity;
a memory (26c) storing a reference ratio of each component for obtaining a white balance;
a comparator (26d) for comparing the calculated actual ratio with the reference ratio stored in the memory; a correction circuit (26e) producing said correction signals for reducing, when one of the calculated actual ratios does not coincide with the reference ratios, light quantities of two colours other than a colour light quantity decreased the most so as to coincide the calculated actual ratio with the reference ratio.

2. The system according to claim 1, wherein
the projection means comprise three cathode ray tubes (18, 19, 20) for three colours and further comprises three projection lenses (21, 22, 23) disposed before corresponding cathode ray tubes.

3. The system according to claim 1, wherein
the projection means comprise three liquid crystal display panels for three colours, and further comprises a projection lens (22) disposed at the output side of the three liquid crystal display panels.

4. The system according to claim 1, wherein
the detector (25) is disposed in a black striped portion of the screen, and the detector is a photodiode for detecting the quantity of a part of light spectral.

5. The system according to claim 1,
further comprising a program for periodically performing the calculation of the quantity of light after start of the program.

## Patentansprüche

1. Weißabgleich-Steuersystem für ein Projektionsfernsehsystem mit einer Rot-Ausgangssteuerschaltung (15),
einer Grün-Ausgangssteuerschaltung (16) und einer Blau-Ausgangssteuerschaltung (17) sowie einer Projektionseinrichtung (18, 19, 20), die Strahlen aus drei Farben jeweils auf einen Bildschirm (24) projiziert, wobei das Steuersystem folgendes aufweist:
- einen Detektor (25) zum Erfassen einer Lichtmenge der Strahlen;
- eine Steuerschaltung (26) zum Erzeugen von Korrektursignalen zum Einstellen der Intensität des Strahls mit jeder der drei Farben;
- eine Signalverarbeitungsschaltung (13) zum Verarbeiten von Bildsignalen, mit denen die drei Ausgangssteuerschaltungen in Abhängigkeit von den Korrektursignalen beaufschlagt werden;
dadurch gekennzeichnet,
daß es sich bei der Steuerschaltung (26) um eine Weißabgleich-Steuerschaltung handelt, die folgendes aufweist:
- eine Farbtrennschaltung (26a) zum Trennen eines von dem Detektor erfaßten Signals in eine rote, eine grüne und eine blaue Komponente;
- eine Recheneinrichtung (26b) zum Berechnen eines Ist-Verhältnisses der erfaßten Lichtmenge jeder Farbkomponente zu einer Gesamtmenge;
- einen Speicher (26c), in dem ein Bezugsverhältnis jeder Komponente zur Erzielung eines Weißabgleichs gespeichert ist;
- einen Komparator (26d) zum Vergleichen des errechneten Ist-Verhältnisses mit dem in dem Speicher gespeicherten Bezugsverhältnis;
- eine Korrekturschaltung (26e), die die Korrektursignale erzeugt, um dann, wenn eines der errechneten Ist-Verhältnisse nicht mit den Bezugsverhältnissen übereinstimmt, die Lichtmengen der beiden anderen Farben als der am meisten verminderten Farblichtmenge zu reduzieren, so daß das errechnete Ist-Verhältnis mit dem Bezugsverhältnis in Übereinstimmung gebracht wird.

2. System nach Anspruch 1,
wobei die Projektionseinrichtung drei Kathodenstrahlröhren (18, 19, 20) für drei Farben aufweist und außerdem drei Projektionslinsen (21, 22, 23) aufweist, die vor den entsprechenden Kathodenstrahlröhren angeordnet sind.

3. System nach Anspruch 1,
wobei die Projektionseinrichtung drei Flüssigkristallanzeigefelder für drei Farben aufweist und außerdem eine Projektionslinse (22) besitzt, die auf der Ausgangsseite der drei Flüssigkristallanzeigefelder angeordnet ist.

4. System nach Anspruch 1,
wobei der Detektor (25) in einen schwarz gestreiften Bereich des Bildschirms angeordnet ist und es sich bei dem Detektor um eine Fotodiode zum Erfassen der Menge eines Teils des Lichtspektrums handelt.

5. System nach Anspruch 1,
weiterhin mit einem Programm zum periodischen Durchführen der Berechnung der Lichtmenge nach Programmstart.

## Revendications

1. Un système de commande de l'équilibre du blanc pour un système de télévision, à projection ayant un circuit de commande de sortie du rouge (15), un circuit de commande de sortie du vert (16) et un circuit de commande de sortie du bleu (17), et des moyens de projection (18, 19, 20) qui projettent respectivement des faisceaux de trois couleurs sur un écran, ledit système de commande comprenant :
un détecteur (25) pour détecter une quantité de lumière des faisceaux ;
un circuit de commande (26) produisant des signaux de correction pour régler l'intensité du faisceau de chacune desdites trois couleurs ;
un circuit de traitement des signaux (13) pour traiter les signaux vidéo appliqués aux trois circuits de commande de sortie en fonction des signaux de correction ;
caractérisé en ce que
ledit circuit de commande (26) est un circuit de commande de l'équilibre du blanc comprenant :
un circuit de séparation des couleurs (26a) pour séparer un signal détecté par le détecteur en composantes rouge, verte et bleue ;
un calculateur (26b) pour calculer un rapport réel entre la quantité détectée de lumière de chaque couleur et une quantité totale ;
une mémoire (26c) mémorisant un rapport de référence de chaque composante pour obtenir un équilibre du blanc ;
un comparateur (26d) pour comparer le rapport réel calculé au rapport de référence mémorisé ;
un circuit de correction (26e) produisant lesdits signaux de correction pour réduire, lorsqu'un des rapports réels calculés ne coïncide pas avec le rapport de référence, les quantités de lumière des deux autres couleurs que la couleur dont la quantité de lumière a le plus diminué afin de faire coïncider le rapport réel calculé avec le rapport de référence.

2. Le système selon la revendication 1, dans lequel les moyens de projection comprennent trois tubes cathodiques (18, 19, 20) pour trois couleurs et comprennent également trois lentilles de projection (21, 22, 23) placées avant les tubes cathodiques correspondants.

3. Le système selon la revendication 1, dans lequel les moyens de projection comprennent trois panneaux d'affichage à cristaux liquides pour trois couleurs, et comprennent également une lentille de projection (22) placée du côté sortie des trois panneaux d'affichage à cristaux liquides.

4. Le système selon la revendication 1, dans lequel le détecteur (25) est placé dans une portion à bande noires de l'écran, et le détecteur est une photodiode pour détecter la quantité d'une partie du spectre de lumière.

5. Le système selon la revendication 1, comprenant également un programme pour effectuer périodiquement le calcul de la quantité de lumière après le lancement du programme.
